# EUROPEAN PATENT APPLICATION

(11) **EP 2 228 397 A1**
(43) Date of publication of application: **15.09.2010**
(21) Application number: 09154830.5
(22) Date of filing: 11.03.2009
(51) Int. Cl.: C08F 220/34, C08F 220/30

(54) **Light and UV stabilisers**

(71) Applicant: Cytec Technology Corporation, Wilmington, DE 19801 (US)
(72) Inventor: Fang, John, Parsippany NJ 07054 (US); Tan, David, 40460 Shah Alam Selangor DE (MY); Scoville, Terry, Kennesaw GA 30152 (US)
(74) Representative: Deckers, Hellmuth Alexander

(57) **Abstract**

A light stabiliser AS comprising a surface-active or amphiphilic part A which leads to migration of the stabiliser to the surface of a material during the process of formation of a surface, and solidification of the material, and a stabilising part S which is the photochemically active ingredient and transforms the energy of the incident light to vibrational or heat energy that is dissipated within the material, **characterised in that** both parts are connected by a chemical bond in the form of a single or multiple bond or of an at least divalent bridging group

## Description

### Field of the Invention

The invention relates to light and UV stabilisers, to a method of making these, and to a method of use thereof comprising adding the stabilisers to the substrate wherein the substrate is in a liquid state.

### Background of the Invention

Light and UV stabilisers protect a material, hereinafter also referred to as substrate, against photochemical degradation. Photochemical degradation is caused primarily by absorption of light by a material, whereby electrons are promoted to an excited state, and the material in such an electronically excited state can react by cleavage or formation of chemical bonds. Such a primary photo-induced chemical reaction can lead to secondary reactions that involve changes in the molecules of the substrate or material, where usually such reactions impair the physical properties of the material, leading to i. a. chalking, yellowing, loss of gloss, and formation of microcracks or cracks.

It is therefore common practice to add light stabilisers to materials used to make plastic objects, films, or surface coatings if these are to be exposed to light, particularly to visible and ultra-violet (UV) light. Use of light stabilisers is not needed in the case of metals which generally do not suffer from photochemical degradation, due to their special structure where electrons reside in energy states that are referred to as valence and conduction bands. Most or all other materials, however, particularly organic materials, are prone to impairment by the action of radiation such as light.

Incident light, including UV light, generally only penetrates the surface layer of any massive body because of the scattering of light in materials which occurs even in transparent materials. The common methods of protecting materials against the undesirable action of light imply adding a stabiliser, i. e. a substance which absorbs light to an elevated extent, compared to the material to be protected, and dissipates the absorbed energy within the material in the form of heat (vibrational energy). The stabiliser is evenly distributed within the material, and the major part of this stabiliser is therefore not prone to be subjected to the action of light, and is therefore unused.

In the investigations made in connection with the present invention, it has been found that concentration of the stabiliser in the surface layer of the material to be protected would make better use of the stabiliser, and increase the efficiency with regard to the amount of stabiliser used.

Fixing a light stabiliser to the surface of polyolefin films has been known from "A novel photoadditive for polyolefin photostabilisation : Hindered amine light stabiliser" by DESAI Shrojal M., PANDEY Jitendra K., and SINGH R. P., "Die Makromolekulare Chemie - Macromolecular symposia", Eurofillers '99 Conference, vol. 169, pp. 121 to 128, where hindered-amine light stabilisers were surface anchored to polyethylene and polypropylene thin films by direct photo-grafting of 1,2,2,6,6-pentamethyl piperidinyl-4-acrylate onto the surface, or by reacting of 1,2,2,6,6-pentamethyl-4-piperidinol with succinic anhydride functionalised polyolefin surface.

This method involves a complicated additional treatment step. It is therefore an object of the invention to provide a class of light stabilisers that allows concentration of a stabiliser in the region of the surface of a material to be protected which does not involve an additional application step.

### Summary of the Invention

This object has been realised by providing a surface-active or amphiphilic light stabiliser that is distributed within a material, which light stabiliser comprises a surface-active or amphiphilic part which leads to migration of the stabiliser to the surface of the said material during the process of formation of a surface, and solidification of the material, and a stabilising part which is the photochemically active ingredient and transforms the energy of the incident light to vibrational or heat energy that is dissipated within the material. Both parts are connected by a chemical bond in the form of a single or multiple bonds or of an at least divalent bridging group.

The invention therefore relates to a surface-active or amphiphilic light stabiliser **AS** comprising a structural moiety **A** which has surface-active or amphiphilic character, and a structural moiety **S** which is capable of absorbing visible and ultraviolet light.

The invention also relates to a coating composition comprising a binder **B,** and a surface-active or amphiphilic light stabiliser **AS** which upon crosslinking and solidification of the coating composition to form a coating film on a substrate, migrates to the surface of the said film in a way that the mass fraction of the surface-active or amphiphilic light stabiliser **AS** in a layer immediately adjacent to the surface of the said coating film is at least 10 % higher than the mass fraction of the surface-active or amphiphilic light stabiliser **AS** in a layer in the centre of the coating film.

### Detailed Description of the Preferred Embodiments

For the purpose of this invention, by a layer immediately adjacent to the surface of the coating film is meant a layer that extends from the surface of the coating film which is not in contact with the substrate up to a depth of 2.5 µm beneath that surface.

The mass fraction of light stabiliser in the coating film layers can be determined in the usual way, particularly using spectroscopic methods such as IR, UV, and Mass Spectroscopy.

By "surface-active", a compound or composition is meant that changes the surface tension of a substance when admixed to the said substance, in a way that the surface tension of the said substance is different from the surface tension of a mixture comprising the said substance and the surface-active compound or composition. The surface-active part is preferably a polymer or oligomer, preferably formed by a vinyl type polymerisation process which can be initiated by radicals.

A molecule is said to have a hindered amine structure if it has an amine functional group which is surrounded by a crowded steric environment, also referred to in the literature as "sterically hindered amine". A molecule is said to have a benzophenone structure if two aromatic rings are connected by a carbonyl group, >C=O. A molecule is said to have a benzotriazole structure if there is a triazole ring (a five-membered ring having three nitrogen atoms in the ring in 1,2,3 - sequence) that has two adjacent carbon atoms in common with a further aromatic ring. A molecule is said to have a triazine structure if there are three non-adjacent nitrogen atoms in a six-membered aromatic ring.

In one embodiment, the surface-active part is amphiphilic and comprises two moieties: a first moiety that is compatible with the material of the coating composition, particularly the binder, i. e. there are no visible phase separation effects in a mixture of the binder and a molecule corresponding to that first moiety in mixtures comprising up to a mass fraction of 5 % of the molecule corresponding to that first moiety, and a second moiety which is incompatible with the binder and forms separate phases if the mixing ratio allows. A molecule is said to correspond to a moiety if a hydrogen atom or a methyl group is added to the radical which forms the said moiety. Preferably, the mass fraction up to which no phase separation is seen in a compatible system is up to 10 %. A visible phase separation is indicated by formation of separate layers, or development of turbidity in the mixture that can be seen with the naked eye.

If a molecule corresponding to the second moiety of the amphiphilic part is mixed with the binder to form a homogeneous liquid mixture with a mass fraction of at least 5 % of the molecules corresponding to the second moiety of the amphiphilic part, this mixture will form separate phases after twenty-four hours or less after mixing, kept at the same temperature that was used for mixing. Formation of separate phases is indicated by macroscopic phase separation, or by the development of turbidity which can be detected with the naked eye.

The stabilising part **S** of the stabilisers **AS** according to the invention is preferably derived from the well-known light or UV stabilisers based on the so-called hindered amines, molecules having a benzophenone structure, molecules having a benzotriazole structure, and molecules having a triazine structure. In the context of this invention, by "a part ... derived from" is meant that a hydrogen atom or a methyl group is cleaved from a molecule, in this case a light stabiliser molecule, to yield a radical which is then referred to as a "part". For example, a hydrogen atom in the 3'-position of (2-hydroxy-4-methoxyphenyl)-phenylmethanone (also referred to by its trivial name "oxybenzone") could be taken away to form a radical which would be addressed here as a "part of oxybenzone".

The stabilising part **S** and the amphiphilic or surface-active part **A** of the light stabiliser **AS** according to the invention are linked together by an at least divalent bridge forming at least one chemical bond with the a surface-active or amphiphilic part **A**, and at least one chemical bond with the stabilising part **S.** Preferably, the at least divalent bridging group comprises at least one structure of the formula -CR¹R²-CR³R⁴-, wherein any of the radicals -R¹, -R², -R³ and -R⁴ may be independently of each other, -H, -F, -Cl, -CH₃, -OH, -OCH₃, an alkyl radical -CₙH₂ₙ₊₁, an oxyalkyl radical -O-CₙH₂ₙ₊₁, where n is in each case independently, from 2 to 18, an aryl radical, and an oxyaryl radical. This structure may be directly bonded to the stabilising part, and the divalent bridge may also comprise additional ester structures -O-CO-, urethane groups -NH-CO-, urea groups -NH-CO-NH, or 2-hydroxy-1,3-propylene groups - CH₂-CH(OH)-CH₂-, or any combination thereof. Linking is preferably effected by addition of a carboxylic acid group, or an aliphatic hydroxyl group connected to the structure of the stabilising part via a flexible spacer group, and addition of an olefinically unsaturated function via reaction of e.g., an acid function with glycidyl (meth)acrylate, under formation of an ester bond, or reaction of a hydroxyl function with the reaction product of 1 mol of (meth)acrylic acid with 1 mol of a diisocyanate, under formation of a urethane bond.

Further preferred embodiments of the invention are detailed in the claims.

Preferably, the material comprising the surface-active or amphiphilic light stabiliser **AS** is a coating composition comprising a binder **B** where the surface-active or amphiphilic light stabiliser **AS** is evenly dispersed in the coating composition. Upon coating a substrate, a film is formed by the material of the coating composition on the substrate. During formation of the film, by evaporation of a solvent which may be an organic solvent or water, the hydrophilic or hydrophobic character of the coating composition is changed. This change is particularly pronounced in aqueous dispersed binders in a coating composition. In this case, a proper choice of the amphiphilic part of the amphiphilic light stabiliser **AS** is to build the amphiphilic part by a portion that is compatible with the polymeric binder **B,** particularly one which has the same or a very similar chemical structure, and one portion that does not form a homogenous mixture with the polymeric binder, particularly having a different chemical structure.

A similar effect of migration of the surface-active or amphiphilic light stabiliser towards the surface of the coating film can be seen in radiation curable binders for coatings. Here the choice for the surface-active or amphiphilic part has to be made such that the monomeric or oligomeric binder molecules which form the radiation-curable coating composition form a homogeneous solution or dispersion with the surface-active or amphiphilic light stabiliser **AS.** Upon polymerisation which is induced by irradiating the wet coating film, formation of the polymer leads to a decrease in the solubility of the surface-active or amphiphilic light stabiliser, which decreasing solubility also leads to a migration of the surface-active or amphiphilic light stabiliser towards the surface of the coating film which is in the process of formation.

Another similar effect can be realised in light stabilisation of objects made of thermoplastic polymers that crystallise upon solidification, such as polyolefins, polyesters, polyamides, or polyacetal. By choosing the surface-active or amphiphilic part of the surface-active or amphiphilic light stabiliser so that there is only a weak tendency to co-crystallise with the solidifying thermoplastic polymer, the light stabiliser is also exuded towards the surface of the object. This tendency can also be increased by adding nucleation agents to the polymer which promotes crystallisation, and hence, migration of the surface-active or amphiphilic light stabiliser **AS.**

The same effect can be seen in a coating prepared from a powder coating composition: upon solidification of the film on the substrate, and particularly marked in the case of a powder coating binder based on a crystalline polymer, the light stabiliser is exuded towards the surface. This can be promoted by applying the powder coating to a substrate which is colder on its surface than the ambient. The light stabiliser is then preferentially concentrated in the zone which is still liquid, thus further enhancing the migration of the surface-active light stabiliser **AS** towards the surface of the coating film.

The invention is further explained by the following examples which are not to be construed as limiting.

### Examples

### Example 1 Preparation of a polymeric light stabiliser

A glass reactor having a volume of 500 ml equipped with reflux condenser, stirrer, and two feeding pumps was charged with 50 g of isopropanol. The contents were heated to reflux, and a mixture of 0.7 g of t-amyl peroxy (2-ethylhexanoate) (®Lupersol 575, Pennwalt Corp.), 140 g of ethyl acetate, 5 further g of isopropanol, 50.1 g of butyl acrylate, 22.8 g of 2-ethylhexyl acrylate, and 26 g of (2-hydroxy-4-[2-acryloxy]-ethoxyphenyl)-phenylmethanone, an olefinically unsaturated substituted benzophenone, was gradually added over two hours. The mixture was kept at reflux temperature under stirring for another hour, and then, a second mixture of 0.6 g of t-amyl peroxy (2-ethylhexanoate), 5 g of isopropanol, 21.4 g of butyl acrylate, and 9.7 g of 2-ethylhexylacrylate was added to the reaction mixture in the course of two further hours. Reaction was then brought to completion by keeping the mixture at reflux temperature for one and one half more hours, and finally, residual monomers, solvent and by-products from the decomposition of the radical initiator were removed by distillation under reduced pressure. The resulting polymer was cooled to 65 °C, and filtered through a filter having a pore size of 25 µm. The polymer obtained in a yield of 99.1 % was light yellow and viscous, and had a weight average molar mass of 12.2 kg/mol, as determined by gel permeation chromatography using a polystyrene standard. The polymer was referred to as "UV-1". The mass fraction of 2-hydroxybenzophenone moieties in this polymer was 20 %.

### Example 2 Preparation of a siloxane-modified polymeric light stabiliser

A glass reactor having a volume of 500 ml equipped with reflux condenser, stirrer, and two feeding pumps was charged with 50 g of isopropanol. The contents were heated to reflux, and a mixture of 0.7 g of t-amyl peroxy (2-ethylhexanoate) (®Lupersol 575, Pennwalt Corp.), 140 g of ethyl acetate, 5 further g of isopropanol, 50.1 g of butyl acrylate, 20 g of 2-ethylhexyl acrylate, 3.9 g of vinyl terminated polysiloxane, and 26 g of (2-hydroxy-4-[2-acryloxy]-ethoxyphenyl)-phenylmethanone, an olefinically unsaturated substituted benzophenone, was gradually added over two hours. The mixture was kept at reflux temperature under stirring for another hour, and then, a second mixture of 0.6 g of t-amyl peroxy (2-ethylhexanoate), 5 g of isopropanol, 21.4 g of butyl acrylate, and 8.6 g of 2-ethylhexylacrylate was added to the reaction mixture in the course of two further hours. Reaction was then brought to completion by keeping the mixture at reflux temperature for one and one half more hours, and finally, residual monomers, solvent and by-products from the decomposition of the radical initiator were removed by distillation under reduced pressure.

The resulting polymer was cooled to 65 °C, and filtered through a filter having a pore size of 25 µm. The polymer obtained in a yield of 98.8 % was light yellow and viscous, and had a weight average molar mass of 12.5 kg/mol, as determined by gel permeation chromatography using a polystyrene standard. The polymer was referred to as "UV-2". The mass fraction of 2-hydroxybenzophenone moieties in this polymer was 20 %.

### Example 3 Preparation of Coatings

Coating compositions based on an acrylic binder resin were prepared according to the formulations of table 1. These were stabilised with the polymeric stabilisers of Examples 1 and 2 (UV-1 and UV-2), and with a conventional benzophenone type light stabiliser ("Comp.", 2-hydroxy-4-(2-ethylhexoxy)-benzophenone), a non-stabilised sample being included as reference. These coating compositions were applied to sheets of cold roll steel having been subjected to a CED (cathodic electrodeposition) primer treatment and white basecoat before, to give a dry film thickness of from 45 µm to 50 µm (1.8 mils to 2.0 mils) after drying for 30 minutes at 140 °C.

**Table 1 Coating formulations**

| Constituents † | A | B | C | D |
|---|---|---|---|---|
| Acrylic Resin* | 75 g | 75 g | 75 g | 75 g |
| Melamine Crosslinker Resin†† | 25 g | 25 g | 25 g | 25 g |
| Acid Catalyst (DDBSA)‡ | 0.7 g | 0.7 g | 0.7 g | 0.7 g |
| UV-1 (Example 1) | 1 g | 0 | 0 | 0 |
| UV-2 (Example 2) | 0 | 1 g | 0 | 0 |
| Comp. Light Stabiliser | 0 | 0 | 2 g | 0 |
| HALS¤ | 1 g | 1 g | 1 g | 0 |

| | | | | |
|---|---|---|---|---|
| † a solvent mixture of butanol (15 g), xylene (18 g) and PM Acetate (propylene glycol monomethylether acetate, 18 g) was added to all formulations * hydroxyfunctional acrylic resin dissolved in a mixture of alkylated aromatics -®Solvent Naphtha, mass fraction of solids 65 %, acid number 22 mg/g, hydroxyl number 120 mg/g †† highly methylated melamine formaldehyde resin, 3800 mPa s at 25 °C, mass fraction of free formaldehyde less than 0.3 % ‡ DDBSA = dodecylbenzene sulphonic acid ¤ mixture of mono- and bis-ester of 1,2,2,6,6-pentamethyl-4-piperidol and sebacic acid (®Tinuvin 262, Ciba Specialty Chemicals Inc.) | | | | |

The mass fraction of the 2-hydroxybenzophenone moiety is 0.2 % for both coating composition A and B, and 2.0 % for coating composition C. Composition D is a non-stabilised control.

These coated steel panels (panel A coated with coating composition A, panel B coated with coating composition B, panel C coated with coating composition C, panel D coated with coating composition D) were subjected to a Xenon Weathering Test in accordance with ASTM G 155 (at 0.35 W/m² and (63 ± 3) °C; cycles of 102 minutes of irradiation followed by 18 minutes of irradiation and water spray). Change in yellowness in the coating film was monitored after a specified exposure time, the results are compiled in table 2.

Yellowness (Δb) is measured with a customary instrument (Hunter LAB or BYK Gardner Spectrophotometer) and calculated according to ASTM E 313 or D 1925.

**Table 2 Change in yellowness (Δb) after irradiation**

| Δb after | 500 h | 1000 h | 1500 h | 2000 h | 3000 h | 4000 h | 5000 h |
|---|---|---|---|---|---|---|---|
| panel A | 0.09 | 0.29 | 0.34 | 0.49 | 0.6 | 0.8 | 0.94 |
| panel B | 0.1 | 0.35 | 0.37 | 0.49 | 0.6 | 0.7 | 0.88 |
| panel C | 0.35 | 0.66 | 0.73 | 0.91 | 1.2 | 1.4 | 1.67 |
| panel D | 0.56 | 1.31 | 2.06 | 3.39 | 8.4 | failed | |

It can be seen that although the mass fraction of the stabilising structure, 2-hydroxybenzophenone, in coating compositions A and B, is only 10 % of that of coating composition C (here, a mass fraction of 2.0 %), the protection against yellowing caused by UV light is far lower in the coating composition comprising the conventional UV stabiliser, than in the case of the UV stabilisers according to the invention, in coating compositions A and B.

## Claims

1. A light stabiliser AS comprising a surface-active or amphiphilic part A which leads to migration of the stabiliser to the surface of a material during the process of formation of a surface, and solidification of the material, and a stabilising part S which is the photochemically active ingredient and transforms the energy of the incident light to vibrational or heat energy that is dissipated within the material, **characterised in that** both parts are connected by a chemical bond in the form of a single or multiple bond or of an at least divalent bridging group.

2. The light stabiliser of claim 1 wherein the surface-active or amphiphilic part is an oligomer or polymer selected from the group consisting of vinyl polymers, polymers comprising siloxane moieties, and polymers comprising difluoromethylene (-CF₂-) units.

3. The light stabiliser of claim 1 wherein the stabilising part comprises a moiety having a structure selected from the group consisting of a hindered amine structure, a benzophenone structure, a benzotriazole structure, and a triazine structure.

4. The light stabiliser of claim 1 wherein the at least divalent bridging group comprises at least one structure of the formula -CR¹R²-CR³R⁴-, wherein any of the radicals -R¹, -R², -R³ and -R⁴ is, independently of each other, selected from the group consisting of the radicals -H, -F, -Cl, -CH₃, -OH, -OCH₃, an alkyl radical -CₙH₂ₙ₊₁, an oxyalkyl radical -O-CₙH₂ₙ₊₁, where n is in each case independently, from 2 to 18, an aryl radical, and an oxyaryl radical.

5. The light stabiliser of claim 1 wherein the surface-active or amphiphilic part is selected from the group consisting of an oligomer or polymer of vinyl polymers, an oligomer or polymer comprising siloxane moieties, an oligomer or polymer comprising difluoromethylene (-CF₂-) units, and the stabilising part has a hindered amine structure.

6. The light stabiliser of claim 1 wherein the surface-active or amphiphilic part is is selected from the group consisting of an oligomer or polymer of vinyl polymers, an oligomer or polymer comprising siloxane moieties, an oligomer or polymer comprising difluoromethylene (-CF₂-) units, and the stabilising part has a benzophenone structure.

7. The light stabiliser of claim 1 wherein the surface-active or amphiphilic part is selected from the group consisting of an oligomer or polymer of vinyl polymers, an oligomer or polymer comprising siloxane moieties, an oligomer or polymer comprising difluoromethylene (-CF₂-) units, and the stabilising part has a benzotriazole structure.

8. The light stabiliser of claim 1 wherein the surface-active or amphiphilic part is selected from the group consisting of an oligomer or polymer of vinyl polymers, an oligomer or polymer comprising siloxane moieties, an oligomer or polymer comprising difluoromethylene (-CF₂-) units, and the stabilising part has a triazine structure.

9. A method of use of the light stabiliser of claim 1, comprising adding the said stabiliser to a thermoplastic polymer in a mass fraction of from 0.1 % to 5 %, based on the sum of the masses of the said thermoplastic polymer and the said light stabiliser, melting the mixture of the said thermoplastic polymer and the said light stabiliser, mixing the molten mixture, and solidifying the molten mixture by cooling.

10. A method of use of the light stabiliser of claim 1, comprising adding the said stabiliser to a thermosetting polymeric material in a mass fraction of from 0.1 % to 5 %, based on the sum of the masses of the said thermosetting polymeric material and the said light stabiliser, heating the mixture of the said thermosetting polymeric material and the said light stabiliser to a temperature below the curing temperature of the said thermosetting polymer, mixing the molten mixture, and solidifying the molten mixture by heating to a temperature equal or greater than the curing temperature of the said thermosetting polymeric material.

11. A method of use of the light stabiliser of claim 1, comprising adding the said stabiliser to a crosslinkable polymeric binder dissolved in an organic solvent in a mass fraction of from 0.1 % to 5 %, based on the sum of the masses of the said crosslinkable polymeric binder and the said light stabiliser, to form a coating composition, mixing the said coating composition, applying the mixed coating composition to a substrate to form a film on the substrate, heating the coated substrate to a temperature sufficient to remove at least a part of the solvent, and crosslinking the said film on the said substrate by heating or subjecting the coated substrate to radiation.

12. A method of use of the light stabiliser of claim 1, comprising adding the said stabiliser to a crosslinkable polymeric binder dispersed or emulsified in water in a mass fraction of from 0.1 % to 5 %, based on the sum of the masses of the said crosslinkable polymeric binder and the said light stabiliser, to form a coating composition, mixing the said coating composition, applying the mixed coating composition to a substrate to form a film on the substrate, heating the coated substrate to a temperature sufficient to remove at least a part of the solvent, and crosslinking the said film on the said substrate by heating or subjecting the coated substrate to radiation.
